(19) Europäisches Patentamt
European Patent Office
Office européen des brevets

(11) EP 3 943 180 A1

(12) # EUROPEAN PATENT APPLICATION
published in accordance with Art. 153(4) EPC

(43) Date of publication:
**26.01.2022 Bulletin 2022/04**

(21) Application number: **20773350.2**

(22) Date of filing: **04.03.2020**

(51) International Patent Classification (IPC):
***B01D 69/00*** (2006.01) ***B01D 69/02*** (2006.01)

(52) Cooperative Patent Classification (CPC):
**B01D 69/00; B01D 69/02**

(86) International application number:
**PCT/JP2020/009267**

(87) International publication number:
**WO 2020/189293 (24.09.2020 Gazette 2020/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.03.2019 JP 2019051303**

(71) Applicant: **NITTO DENKO CORPORATION**
**Ibaraki-shi**
**Osaka 567-8680 (JP)**

(72) Inventors:
- **SHIMAZU Akira**
  **Ibaraki-shi, Osaka 567-8680 (JP)**
- **MAEDA Kazuhisa**
  **Ibaraki-shi, Osaka 567-8680 (JP)**
- **IHARA Terukazu**
  **Ibaraki-shi, Osaka 567-8680 (JP)**
- **KIMURA Naomichi**
  **Ibaraki-shi, Osaka 567-8680 (JP)**
- **ITO Yuri**
  **Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **STRUCTURE CONTAINING IONIC LIQUID**

(57) The present invention relates to an ionic liquid-containing structure including an ionic liquid composed of a pair of a cation and an anion, in which a HOMO energy level of the anion is higher than an LUMO energy level of the cation, and a difference between the HOMO energy level of the anion and the LUMO energy level of the cation is 0.2 a.u. or more.

EP 3 943 180 A1

## Description

### TECHNICAL FIELD

The present invention relates to an ionic liquid-containing structure.

### BACKGROUND ART

In recent years, in various fields, a gas separation membrane has been used in order to separate and recover a desired gas from a mixed gas. For example, in order to selectively separate carbon dioxide from a mixed gas containing carbon dioxide, a gas separation membrane having excellent permeability and selectivity of carbon dioxide has been studied. In Non-Patent Literature 1 below, the gas absorption characteristics and gas separation performance of an ionic liquid in a gas separation membrane in which an ionic liquid is supported on a porous body are studied. According to Non-Patent Literature 1, the ionic liquid exhibits excellent $CO_2$ absorption characteristics, and can reduce the risk of a loss, exposure, fire, or the like due to volatilization of an absorption liquid, which has been a problem in a conventional molecular absorption liquid, and thus the ionic liquid is expected as an absorption liquid having a small environmental load. It has been described that the liquid support membrane obtained by impregnating the porous material with an ionic liquid serves as a gas separation membrane exhibiting $CO_2$ permeability selectivity equal to or higher than that of a conventional polymer membrane.

### CITATION LIST

### NON-PATENT LITERATURE

Non-Patent Literature 1: "Gas absorption characteristics of ionic liquids and application to gas separation technology", Surface Technology, Vol. 67, No. 2, 90 (2016), pp 26-31.

### SUMMARY OF INVENTION

### TECHNICAL PROBLEM

In order to efficiently separate a specific gas from a mixed gas, it is required to develop a gas separation membrane having both high selectivity and high permeability.

In view of the above problems, an object of the present invention is to provide an ionic liquid-containing structure that can be used as a gas separation membrane having both high selectivity and high permeability.

### SOLUTION TO PROBLEM

As a result of intensive studies to solve the above problems, the present inventors have found that the above problems can be solved by specifying an anion and a cation constituting an ionic liquid, and has completed the present invention.

[1] An ionic liquid-containing structure comprising an ionic liquid composed of a pair of a cation and an anion, wherein a HOMO energy level of the anion is higher than an LUMO energy level of the cation, and a difference between the HOMO energy level of the anion and the LUMO energy level of the cation is 0.2 a.u. or more.

[2] The ionic liquid-containing structure according to [1], wherein the cation has at least one NH structure.

[3] The ionic liquid-containing structure according to [1] or [2], wherein the ionic liquid has a molecular weight of 400 or less.

[4] The ionic liquid-containing structure according to any one of [1] to [3], wherein the ionic liquid-containing structure is a membrane supporting the ionic liquid, and a permeation coefficient of carbon dioxide $P_{CO2}$ is 2000 Barrer or more.

### ADVANTAGEOUS EFFECTS OF INVENTION

The present invention allows for providing an ionic liquid-containing structure which can be used as a gas separation membrane having both high selectivity and high permeability. Thus, the mixed gas can be efficiently separated.

DESCRIPTION OF EMBODIMENTS

Hereinafter, an embodiment of the present invention will be described in detail.

<Ionic Liquid-Containing Structure>

An ionic liquid-containing structure according to an embodiment of the present invention is a structure including an ionic liquid composed of a pair of a cation and an anion, in which a HOMO energy level of the anion is higher than an LUMO energy level of the cation, and a difference between the HOMO energy level of the anion and the LUMO energy level of the cation is 0.2 a.u. or more.

Since the ionic liquid-containing structure of the present embodiment has high selectivity and high permeability, the mixed gas can be efficiently separated when the ionic liquid-containing structure of the present embodiment is used as a gas separation membrane. Since the ionic liquid-containing structure according to the present embodiment has both high selectivity and high permeability with respect to an acid gas such as carbon dioxide, the ionic liquid-containing structure according to the present embodiment allows for efficiently separating especially carbon dioxide contained in the mixed gas, and can be used for applications such as a $CO_2$-selective permeable membrane.

(Ionic Liquid)

The ionic liquid used in the present embodiment (hereinafter, may be referred to as a specific ionic liquid) is composed of a pair of an anion and a cation, a HOMO energy level of the anion is higher than a LUMO energy level of the cation, and a difference between the HOMO energy level of the anion and the LUMO energy level of the cation (hereinafter, may be referred to as an "energy gap") is 0.2 a.u. or more.

When the energy gap is set to 0.2 a.u. or more, the electrostatic interaction between the anion and the cation is reduced, and an ionic liquid-containing structure having both high selectivity and high permeability is obtained. When the energy gap is set to 0.2 a.u. or more, the electron transfer from the anion to the cation is promoted, and as a result, the electrostatic interaction between the anion and the cation is reduced. It is considered that the decrease in the electrostatic interaction induces a decrease in activation energy of the diffusion of carbon dioxide in the ionic liquid, and thus the permeability of carbon dioxide is increased. On the other hand, it is considered that the reason why the ionic liquid of the present invention has high selectivity to carbon dioxide is that the NH group contained in the ionic liquid interacts with carbon dioxide, and as a result, selective dissolution of carbon dioxide is promoted and this contributes to high selectivity of carbon dioxide.

The energy gap is preferably 0.20 a.u. or more, more preferably 0.21 a.u. or more, and still more preferably 0.22 a.u. or more from the viewpoint of the interaction between the anion and the cation.

As described above, the energy gap ($\Delta E_{HOMO-LUMO}$) of the ionic liquid according to the present embodiment is a value obtained by subtracting the LUMO energy level of the cation from the HOMO energy level of the anion constituting the ionic liquid. Here, the value of the energy level is a value obtained by the structure optimization calculation employing a Becke type 3-parameter density functional theory (B3LYP), using the quantum chemistry calculation program Gaussian 09 manufactured by Gaussian. In this case, 6-31G (d) can be used as the basis function, and calculation can be performed under default conditions for the others. Specifically, an initial structure of molecules before calculation is created using a molecular structure modeling program such as Gaussian View provided by Gaussian. At this time, it is preferable to perform a simple structure modification in order to avoid collision between atoms. In the case of using the Gaussian View, this structure modification may be performed by executing the Clean function on a symmetric molecular model. With respect to the initial structure of the anion molecule and the cation molecule created in this way, the HOMO energy level of the anion and the LUMO energy level of the cation are output by inputting # opt b31yp/6-31G (d) geom = connectivity in the root section when the calculation conditions of Gaussian 09 are set and then by executing the calculation. From these output values, $\Delta E_{HOMO-LUMO}$ can be calculated.

The ionic liquid according to the present embodiment is not limited as long as the energy gap is in the above-described range, and a conventionally known ionic liquid can be used. The ionic liquid preferably has thermal stability and low vapor pressure and can be stably stored even in an atmospheric environment without being volatilized, and is more preferably a molten salt (normal temperature molten salt) which is a liquid at 25°C.

In the present embodiment, the specific ionic liquid is not limited as long as the energy gap is within a specific range, and appropriate ionic liquids may be appropriately selected depending on the application to which the ionic liquid-containing structure is applied.

The ionic liquid is preferably a nitrogen-containing onium salt, a sulfur-containing onium salt, or a phosphorus-containing onium salt. An ionic liquid composed of an organic cation component represented by the following general formulas (C1) to (C5) and an anion component is more preferably used. The ionic liquid having these cations further has excellent antistatic performance.

[Chem. 1]

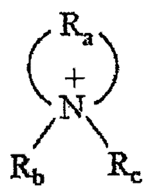

(C1)

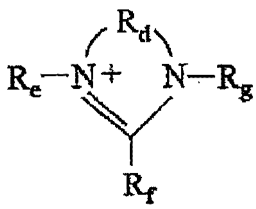

(C2)

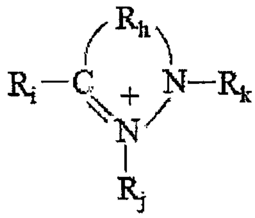

(C3)

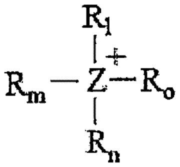

(C4)

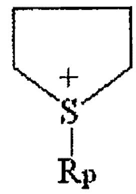

(C5)

In the formula (C1), $R_a$ represents a hydrocarbon group having 4 to 20 carbon atoms or a group in which a part of the hydrocarbon group is substituted with -(C=O)-, and may be a functional group in which a part of the hydrocarbon group is substituted with a hetero atom, and $R_b$ and $R_c$ are the same or different and each represent hydrogen or a hydrocarbon group having 1 to 16 carbon atoms, and may be a functional group in which a part of the hydrocarbon group is substituted with a hetero atom. However, when the nitrogen atom contains a double bond, there is no $R_c$.

In the formula (C2), $R_d$ represents a hydrocarbon group having 2 to 20 carbon atoms, and may be a functional group in which a part of the hydrocarbon group is substituted with a hetero atom, and $R_e$, $R_f$, and $R_g$ are the same or different and each represent hydrogen or a hydrocarbon group having 1 to 16 carbon atoms, and may be a functional group in which a part of the hydrocarbon group is substituted with a hetero atom. At least one of $R_e$ and $R_g$ is preferably hydrogen.

In the formula (C3), $R_h$ represents a hydrocarbon group having 2 to 20 carbon atoms, and may be a functional group in which a part of the hydrocarbon group is substituted with a hetero atom, and $R_i$, $R_j$, and $R_k$ are the same or different and each represent hydrogen or a hydrocarbon group having 1 to 16 carbon atoms, and may be a functional group in which a part of the hydrocarbon group is substituted with a hetero atom. At least one of $R_j$ and $R_k$ is preferably hydrogen.

In Formula (C4), Z represents nitrogen, sulfur, or phosphorus atom, and $R_l$, $R_m$, $R_n$, and $R_o$ are the same or different and each represent a hydrocarbon group having 1 to 20 carbon atoms, and may be a functional group in which a part of the hydrocarbon group is substituted with a hetero atom. The functional group substituted with the hetero atom preferably includes NH However, when Z is a sulfur atom, there is no $R_o$.

In the formula (C5), $R_P$ represents a hydrocarbon group having 1 to 18 carbon atoms, and may be a functional group in which a part of the hydrocarbon group is substituted with a hetero atom. The functional group substituted with the hetero atom preferably includes NH

Examples of the cation represented by the formula (C1) include a pyridinium cation, a piperidinium cation, a pyrrolidinium cation, a cation having a pyrroline skeleton, a cation having a pyrrole skeleton, and a morpholinium cation.

Specific examples thereof include 1-ethylpyridinium cation, 1-butylpyridinium cation, 1-hexylpyridinium cation, 1-butyl-3-methylpyridinium cation, 1-butyl-4-methylpyridinium cation, 1-hexyl-3-methylpyridinium cation, 1-butyl-3,4-dimethylpyridinium cation, N-methyl-2-oxopyrrolidinium cation, 1,1-dimethylpyrrolidinium cation, 1-ethyl-1-methylpyrrolidinium cation, 1-methyl-1-propylpyrrolidinium cation, 1-methyl-1-butylpyrrolidinium cation, 1-methyl-1-pentylpyrrolidinium cation, 1-methyl-1-hexylpyrrolidinium cation, 1-methyl-1-heptylpyrrolidinium cation, 1-ethyl-1-propylpyrrolidinium cation, 1-ethyl-1-butylpyrrolidinium cation, 1-ethyl-1-pentylpyrrolidinium cation, 1-ethyl-1-hexylpyrrolidinium cation, 1-ethyl-1-heptylpyrrolidinium cation, 1,1-dipropylpyrrolidinium cation, 1-propyl-1-butylpyrrolidinium cation, 1,1-dibutylpyrrolidinium cation, pyrrolidinium-2-one cation, 1-propylpiperidinium cation, 1-pentylpiperidinium cation, 1,1-dimethylpiperidinium cation, 1-methyl-1-ethylpiperidinium cation, 1-methyl-1-propylpiperidinium cation, 1-methyl-1-butylpiperidinium cation, 1-methyl-1-pentylpiperidinium cation, 1-methyl-1-hexylpiperidinium cation, 1-methyl-1-heptylpiperidinium cation, 1-ethyl-1-propylpiperidinium cation, 1-ethyl-1-butylpiperidinium cation, 1-ethyl-1-pentylpiperidinium cation, 1-ethyl-1-hexylpiperidinium cation, 1-ethyl-1-heptylpiperidinium cation, 1,1-dipropylpiperidinium cation, 1-propyl-1-butylpiperidinium cation, 1,1-dibutylpiperidinium cation, 2-methyl-1-pyrroline cation, 1-ethyl-2-phenylindole cation, 1,2-dimethylindole cation, 1-ethylcarbazole cation, and N-ethyl-N-methylmorpholinium cation.

Examples of the cation represented by the formula (C2) include an imidazolium cation, a tetrahydropyrimidinium cation, and a dihydropyrimidinium cation.

Specific examples thereof include 1-methylimidazolium cation, 1-ethylimidazolium cation, 1-propylimidazolium cation, 1-butylimidazolium cation, 1-hexylimidazolium cation, 1-octylimidazolium cation, 1-decylimidazolium cation, 1-dodecylimidazolium cation, 1-tetradecylimidazolium cation, 1,2-dimethylimidazolium cation, 1-ethyl-2-methylimidazolium cation, 1-butyl-2-dimethylimidazolium cation, 1-hexyl-2-methylimidazolium cation, 1,3-dimethylimidazolium cation, 1,3-diethylimidazolium cation, 1-ethyl-3-methylimidazolium cation, 1-butyl-3-methylimidazolium cation, 1-hexyl-3-methylimidazolium cation, 1-octyl-3-methylimidazolium cation, 1-decyl-3-methylimidazolium cation, 1-dodecyl-3-methylimidazolium cation, 1-tetradecyl-3-methylimidazolium cation, 1,2-dimethyl-3-propylimidazolium cation, 1-ethyl-2,3-dimethylimidazolium cation, 1-butyl-2,3-dimethylimidazolium cation, 1-hexyl-2,3-dimethylimidazolium cation, 1-(2-methoxyethyl)-3-methylimidazolium cation, 1,3-dimethyl-1,4,5,6-tetrahydropyrimidinium cation, 1,2,3-trimethyl-1,4,5,6-tetrahydropyrimidinium cation, 1,2,3,4-tetramethyl-1,4,5,6-tetrahydropyrimidinium cation, 1,2,3,5-tetramethyl-1,4,5,6-tetrahydropyrimidinium cation, 1,3-dimethyl-1,4-dihydropyrimidinium cation, 1,3-dimethyl-1,6-dihydropyrimidinium cation, 1,2,3-trimethyl-1,4-dihydropyrimidinium cation, 1,2,3-trimethyl-1,6-dihydropyrimidinium cation, 1,2,3,4-tetramethyl-1,4-dihydropyrimidinium cation, and 1,2,3,4-tetramethyl-1,6-dihydropyrimidinium cation.

Examples of the cation represented by the formula (C3) include a pyrazolium cation and a pyrazolinium cation.

Specific examples thereof include 1-methylpyrazolium cation, 3-methylpyrazolium cation, 1-ethyl-2-methylpyrazolinium cation, 1-ethyl-2,3,5-trimethylpyrazolium cation, 1-propyl-2,3,5-trimethylpyrazolium cation, 1-butyl-2,3,5-trimethylpyrazolium cation, 1-ethyl-2,3,5-trimethylpyrazolinium cation, 1-propyl-2,3,5-trimethylpyrazolinium cation, and 1-butyl-2,3,5-trimethylpyrazolinium cation.

Examples of the cation represented by the formula (C4) include a tetraalkylammonium cation, a trialkylsulfonium cation, a tetraalkylphosphonium cation, and a cation in which a part of the alkyl group is substituted with an alkenyl group, an alkoxyl group, or an epoxy group.

Specific examples thereof include tetramethylammonium cation, tetraethylammonium cation, tetrabutylammonium cation, tetrapentylammonium cation, tetrahexylammonium cation, tetraheptylammonium cation, triethylmethylammonium cation, tributylethylammonium cation, trimethyldecylammonium cation, N,N-diethyl-N-methyl-N-(2-methoxyethyl) ammonium cation, glycidyltrimethylammonium cation, trimethylsulfonium cation, triethylsulfonium cation, tributylsulfonium cation, trihexylsulfonium cation, diethylmethylsulfonium cation, dibutylethylsulfonium cation, dimethyldecylsulfonium cation, tetramethylphosphonium cation, tetraethylphosphonium cation, tetrabutylphosphonium cation, tetrahexylphosphonium cation, tetraoctylphosphonium cation, triethylmethylphosphonium cation, tributylethylphosphonium cation, trimethyldecylphosphonium cation, diallyldimethylammonium cation, and tributyl-(2-methoxyethyl) phosphonium cation. Among these, asymmetrical tetraalkylammonium cations, asymmetrical trialkylsulfonium cations, and asymmetrical tetraalkylphosphonium cations, such as triethylmethylammonium cation, tributylethylammonium cation, trimethyldecylammonium cation, diethylmethylsulfonium cation, dibutylethylsulfonium cation, dimethyldecylsulfonium cation, triethylmethylphosphonium cation, tributylethylphosphonium cation, and trimethyldecylphosphonium cation, N,N-diethyl-N-methyl-N-(2-methoxyethyl) ammonium cation, glycidyltrimethylammonium cation, diallyldimethylammonium cation, N,N-dimethyl-N-ethyl-N-propylammonium cation, N,N-dimethyl-N-ethyl-N-butylammonium cation, N,N-dimethyl-N-ethyl-N-pentylammonium cation, N,N-dimethyl-N-ethyl-N-hexylammonium cation, N,N-dimethyl-N-ethyl-N-heptylammonium cation, N,N-dimethyl-N-ethyl-N-nonylammonium cation, N,N-dimethyl-N,N-dipropylammonium cation, N,N-diethyl-N-propyl-N-butylammonium cation, N,N-dimethyl-N-propyl-N-pentylammonium cation, N,N-dimethyl-N-propyl-N-hexylammonium cation, N,N-dimethyl-N-propyl-N-heptylammonium cation, N,N-dimethyl-N-butyl-N-hexylammonium cation, N,N-diethyl-N-butyl-N-heptylammonium cation, N,N-dimethyl-N-pentyl-N-hexylammonium cation, N,N-dimethyl-N,N-dihexylammonium cation, trimethylheptylammonium cation, N,N-diethyl-N-methyl-N-propylammonium cation, N,N-diethyl-N-methyl-N-pentylammonium cation, N,N-diethyl-N-methyl-N-heptylammonium cation, N,N-diethyl-N-propyl-N-pentylammonium cation, triethylpropylammonium cation, triethylpentylammonium cation, triethylheptylammonium cation, N,N-dipropyl-N-methyl-N-ethylammonium cation, N,N-dipropyl-N-methyl-N-pentylammonium cation, N,N-dipropyl-N-butyl-N-hexylammonium cation, N,N-dipropyl-N, N-dihexylammonium cation, N,N-dibutyl-N-pentylammonium cation, N,N-dibutyl-N-methyl-N-hexylammonium cation, trioctylmethylammonium cation, and N-methyl-N-ethyl-N-propyl-N-pentylammonium cation are preferably used.

Examples of the cation represented by the formula (C5) include a sulfonium cation. Specific examples of the $R_P$ in the formula (E) include a methyl group, an ethyl group, a propyl group, a butyl group, a hexyl group, an octyl group, a nonyl group, a decyl group, a dodecyl group, a tridecyl group, a tetradecyl group, and an octadecyl group.

In the present embodiment, the cation of the ionic liquid preferably has at least one NH structure. Here, the NH structure refers to a structure in which a hydrogen atom is bonded to a nitrogen atom. When the cation has at least one NH structure, local electron transfer from the anion to the cation is likely to occur, and as a result, the electrostatic interaction between the anion and the cation is reduced.

On the other hand, the anion component is not limited as long as the anion component becomes an ionic liquid and satisfies the condition that the HOMO energy level becomes higher than the LUMO energy level of the cation and the difference between the HOMO energy level of the anion and the LUMO energy level of the cation is 0.2 a.u. or more. For example, $Cl^-$, $Br^-$, $I^-$, $AlCl_4^-$, $Al_2Cl_7^-$, $BF_4^-$, $PF_6^-$, $SCN^-$, $ClO_4^-$, $NO_3^-$, $CH_3COO^-$, $CF_3COO^-$, $CH_3SO_3^-$, $CF_3SO_3^-$, $C_4F_9SO_3^-$, $(CF_3SO_2)_2N^-$, $(C_2F_5SO_2)_2N^-$, $(C_3F_7SO_2)_2N^-$, $(C_4F_9SO_2)_2N^-$, $(CF_3SO_2)_3C^-$, $AsF_6^-$, $SbF_6^-$, $NbF_6^-$, $TaF_6^-$, $F(HF)_n^-$, $(CN)_2N^-$, $C_4F_9SO_3^-$, $(C_2F_5SO_2)_2N^-$, $C_3F_7COO^-$, $(CF_3SO_2)(CF_3CO)N^-$, $C_9H_{19}COO^-$, $(CH_3)_2PO_4^-$, $(C_2H_5)_2PO_4^-$, $CH_3OSO_3^-$, $C_2H_5OSO_3^-$, $C_4H_9OSO_3^-$, $C_6H_{13}OSO_3^-$, $C_8H_{17}OSO_3^-$, $CH_3(OC_2H_4)_2OSO_3^-$, $C_6H_4(CH_3)SO_3^-$, $(C_2F_5)_3PF_3^-$, $CH_3CH(OH)COO^-$, $(FSO_2)_2N^-$, $B(CN)4^-$, $C(CN)_3^-$, $N(CN)_2^-$, p-toluenesulfonate anion, 2-(2-methoxyethyl) ethyl sulfate anion and the like can be used.

As the anion component, an anion represented by the following formula (C6) can also be used.

[Chem. 2]

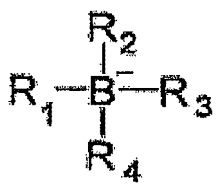

(C6)

[In the formula (C6), each of $R_1$ to $R_4$ independently represents a hydrogen atom, an alkyl group which may have a substituent, an alkenyl group which may have a substituent, an alkynyl group which may have a substituent, an aryl group which may have a substituent, and a heterocyclic group which may have a substituent. The hydrogen atom of the substituent may be further substituted with another substituent (such as a substituent of an electron withdrawing group).]

As the anion component, an anion represented by the following formula (C7) can also be used.

[Chem. 3]

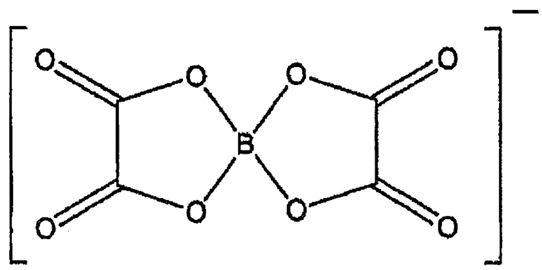

(C7)

Examples of the ionic liquid used in the present invention include an ionic liquid having an imidazolium, pyridinium, pyrrolidinium, ammonium or phosphonium and a substituent having 1 or more carbon atoms, and a Gemini-type ionic liquid, assuming the use of a $CO_2$-selective permeable membrane.

Specific examples of the ionic liquid used in the present invention are appropriately selected from the combination of the cation component and the anion component, and include, for example, N-methyl-2-oxopyrrolidinium acetate; 1-methylimidazolium acetate; 1-ethyl-1H-imidazolium acetate; a compound [0.244 a.u.] using 1-ethyl-1H-imidazolium as the cation, and 2-propenoic acid and an ion (1-) as the anion; a compound [0.221 a.u.] using N-methyl-2-oxopyrrolidinium as the cation, and 2-propenoic acid and an ion (1-) as the anion; a compound [0.231 a.u.] using 1-ethyl-1H-imidazolium as the cation, and hexanedioic acid and an ion (1-) as the anion; a compound [0.208 a.u.] using N-methyl-2-oxopyrrolidinium as the cation, and hexanedioic acid and an ion (1-) as the anion; a compound [0.241 a.u.] using 1-ethyl-1H-imidazolium as the cation, and alanine and an ion (1-) as the anion; a compound [0.217 a.u.] using N-methyl-2-oxopyrrolidinium as the cation, and alanine and an ion (1-) as the anion; a compound [0.238 a.u.] using 1-ethyl-1H-imidazolium as the cation, and alanine, 2-methyl-, and an ion (1-) as the anion; a compound [0.215 a.u.] using N-methyl-2-oxopyrrolidinium as the cation, and alanine, 2-methyl-, and the ion (1-) as the anion; a compound [0.239 a.u.] using 1-ethyl-1H-imidazolium as the cation, and nonanedioic acid and an ion (1-) as the anion; a compound [0.216 a.u.] using N-methyl-2-oxopyrrolidinium as the cation, and nonanedioic acid and an ion (1-) as the anion; a compound [0.214 a.u.] using 1-ethyl-1H-imidazolium as the cation, and acetic acid, bromo-, and an ion (1-) as the anion; a compound [0.215 a.u.] using 1-ethyl-1H-imidazolium as the cation, and propanoic acid, 2-bromo-2-methyl-, and an ion (1-) as the anion; a compound [0.215 a.u.] using 1-ethyl-1H-imidazolium as the cation, and propanoic acid, 2-bromo-, and an ion (1-) as the anion; a compound [0.248 a.u.] using 1-ethyl-1H-imidazolium as the cation, and butanoic acid and an ion (1-) as the anion; a compound [0.225 a.u.] using N-methyl-2-oxopyrrolidinium as the cation, and butanoic acid and an ion (1-) as the anion; a compound [0.236 a.u.] using 1-ethyl-1H-imidazolium as the cation, and butanoic acid, 3,3-dimethyl-, and an ion (1-) as the anion; a compound [0.212 a.u.] using N-methyl-2-oxopyrrolidinium as the cation, and butanoic acid, 3,3-dimethyl-, and an ion (1-) as the anion; a compound [0.224 a.u.] using N-methyl-2-oxopyrrolidinium as the cation, and pentanoic acid and an ion (1-) as the anion; a compound [0.247 a.u.] using 1-ethyl-1H-imidazolium as the cation,

and pentanoic acid, and an ion (1-) as the anion; a compound [0.228 a.u.] using N-methyl-2-oxopyrrolidinium as the cation, and propanoic acid and an ion (1-) as the anion; a compound [0.251 a.u.] using 1-ethyl-1H-imidazolium as the cation, and propanoic acid and an ion (1-) as the anion. The values in [] above are the values of the difference between the HOMO energy level of the anion and the LUMO energy level of the cation.

Among these, from the viewpoint of gas separation performance, it is preferable to use N-methyl-2-oxopyrrolidinium acetate, 1-methylimidazolium acetate, or 1-ethyl-1H-imidazolium acetate.

The ionic liquid used in the present invention preferably has a molecular weight of 400 or less, more preferably 160 or less. The lower limit is preferably 50 or more, more preferably 161 or more. When the molecular weight is 400 or less, the effect of improving the permeability of carbon dioxide is obtained.

The ionic liquid may be used alone or the two or more kinds thereof may be mixed and used.

As the ionic liquid, a commercially available ionic liquid may be used, or the ionic liquid may be synthesized. The method for synthesizing the ionic liquid is not limited as long as a desired ionic liquid can be obtained. In general, a halide method, a hydroxide method, an acid ester method, a complex forming method, a neutralization method, and the like as described in the literature "Ionic liquids-Forefront and Future of Development-" [published by CMC Publishing Co., Ltd.] are used.

In the production method of the present embodiment, the amount of ionic liquid to be used is preferably 5 mass% or more, and more preferably 30 mass% or more, based on 100 mass% of the ionic liquid-containing structure, from the viewpoint of gas separation performance of the obtained ionic liquid-containing structure. The amount is preferably 95 mass% or less, and more preferably 90 mass% or less. When the amount is 5 mass% or more, sufficient separation performance can be obtained, and when the amount is 95 mass% or less, the self-supporting property of the structure can be ensured.

[Structure]

In the ionic liquid-containing structure of the present embodiment, the structure in which the ionic liquid is supported is not limited as long as the structure has gas permeability and can contain the ionic liquid, and is preferably a porous structure or a gel-like structure. The structure is preferably a membrane, and more preferably a porous membrane or a gel-like membrane.

The ionic liquid-containing structure according to the embodiment of the present invention is preferably a membrane supporting an ionic liquid having an energy gap in a specific range.

The structure may be an inorganic material, or an organic material, and is preferably formed of an organic polymer material. Examples thereof include various resins such as polyolefin resins such as polyethylene and polypropylene, fluorine-containing resins such as polytetrafluoroethylene, polyvinyl fluoride, and polyvinylidene fluoride, polystyrene, cellulose acetate, polyurethane, polyacrylonitrile, polyphenylene oxide, polysulfone, polyethersulfone, polyimide, and polyaramide.

The structure may have any shape such as a plate shape, a spiral shape, a tubular shape, or a hollow fiber shape. When the structure is a membrane such as a porous membrane or a gel-like membrane, the thickness of the membrane is preferably 1 μm or more, more preferably 5 μm or more, and still more preferably 10 μm or more from the viewpoint of the mechanical strength. From the viewpoint of the gas permeability, the thickness is preferably 1000 μm or less, more preferably 500 μm or less, and still more preferably 200 μm or less.

From the viewpoint of gas permeability, the porosity of the membrane is preferably 10% or more, more preferably 20% or more, and still more preferably 50% or more. From the viewpoint of mechanical strength, the porosity thereof is preferably 98% or less, more preferably 95% or less, and still more preferably 90% or less.

The ionic liquid-containing structure according to the embodiment of the present invention can be produced by allowing the ionic liquid to permeate into the structure or by supporting the ionic liquid on the structure.

[$CO_2$ Permeability Coefficient of Ionic Liquid-Containing Structure and Separation Factor α of $CO_2$ and He]

The ionic liquid-containing structure according to the embodiment of the present invention is a membrane supporting a specific ionic liquid, and the permeability coefficient of carbon dioxide $P_{CO2}$ is preferably 2000 Barrer or more. From the viewpoint of $CO_2$ gas permeability, the $CO_2$ permeability coefficient $P_{CO2}$ is more preferably 2500 Barrer or more, and even more preferably 3000 Barrer or more.

$$\text{Note that 1 Barrer} = 1 \times 10^{-10}\ \text{cm}^3(\text{STP})\cdot\text{cm}/(\text{s}\cdot\text{cm}^2\cdot\text{cmHg}).$$

In the ionic liquid-containing structure according to the embodiment of the present invention, the separation factor α ($CO_2$/He) of $CO_2$ and He is preferably 10 or more, more preferably 20 or more, and still more preferably 25 or

more, from the viewpoint of $CO_2$ gas separation performance.

The $CO_2$ permeability coefficient $P_{CO2}$ can be calculated using a gas permeation measuring apparatus (manufactured by GL Sciences Inc.) by an equal pressure method. A mixed gas of $CO_2$ and He is allowed to flow through the supply side at atmospheric pressure, and the Ar gas at the atmospheric pressure is circulated through the permeation side. The changes in the $CO_2$ concentration and the He concentration can be determined by introducing a part of the gas such as helium on the permeation side into the gas chromatograph at constant time intervals. The permeation rate of each of $CO_2$ and He can be determined from the amount of increase in each of $CO_2$ concentration and He concentration with respect to the lapse of time.

The value of the $CO_2$ permeability coefficient $P_{CO2}$ and the value of the separation factor $\alpha$ of $CO_2$ and He are values obtained by the following setting conditions of the gas permeation measuring apparatus, the following gas chromatographic analysis conditions, and the following calculation method of the gas permeability coefficient.

<Setting Conditions of Gas Permeation Measuring Apparatus>

Supplied gas amount: 200 cc/min
Supplied gas composition: $CO_2$/He (50/50) (volume ratio)
Sweep gas at permeation side: Ar
Sweep gas amount at permeation side: 10 cc/min.
Permeation area: 8.3 $cm^2$
Measuring temperature: 30°C

<Gas Chromatography Analysis Conditions>

Ar carrier gas amount: about 10 cc/min.
TCD temperature: 150°C
Oven temperature: 120°C
TCD current: 70 mA
TCD polarity: [-] LOW
TCD LOOP: 1 ml Silcosteel tube 1/16" × 1.0 × 650 mm

[Equation 1]

$$Q_{CO2} = \frac{N_{CO2}}{A \times (P_f \times X_{CO2} - P_p \times Y_{CO2})} \quad \cdots\cdots \quad 1$$

$$Q_{He} = \frac{N_{He}}{A \times (P_f \times X_{He} - P_p \times Y_{He})} \quad \cdots\cdots \quad 2$$

$$\alpha = \frac{(Y_{CO2}/Y_{He})}{(X_{CO2}/X_{He})} \quad \cdots\cdots \quad 3$$

The gas permeation amounts $N_{CO2}$ and $N_{He}$ can be calculated from the gas concentration in the flowing gas on the permeation side determined by gas chromatography and the permeance (permeation rate) $Q_{CO2}$ and $Q_{He}$ can be calculated based on the equations 1 and 2. Moreover, the separation factor $\alpha$ of $CO_2$ and He can be calculated based on the equation 3.

Here, $N_{CO2}$ and $N_{He}$ represent the permeation amounts of $CO_2$ and He, $P_f$ and $P_p$ represent the total pressure of a supplied gas and the total pressure of a permeated gas, A represents membrane area, $X_{CO2}$ and $X_{He}$ represent the molar fractions of $CO_2$ and He in the supplied gas, respectively, and $Y_{CO2}$ and $Y_{He}$ represent molar fractions of $CO_2$

and He in the permeated gas, respectively.

The $CO_2$ permeability coefficient $P_{CO2}$ can be calculated by the product of permeance $Q_{CO2}$ and $Q_{He}$ and the effective membrane thickness of the ionic liquid.

The effective membrane thickness can be determined by the product of the membrane thickness and the porosity of the ionic liquid-supported membrane supporting the ionic liquid.

The ionic liquid-containing structure of the present embodiment has both high selectivity and high permeability, and thus the ionic liquid-containing structure can efficiently separate the mixed gas when used as a gas separation membrane. For example, carbon dioxide can be efficiently separated from the mixed gas. The ionic liquid-containing structure can be applied as a $CO_2$ absorbing medium such as a $CO_2$ absorbing material and a CO2-selective permeable membrane. The ionic liquid-containing structure of the present invention can also be applied to, for example, a conductive material.

EXAMPLES

Hereinafter, the present invention will be specifically described with reference to Examples, but the present invention is not limited to these Examples.

[Example 1]

N-methyl-2-oxopyrrolidinium acetate (No. 425 in Table 1) as the ionic liquid was allowed to permeate in Durapore Membrane filter (HVHP, hole diameter 0.45 $\mu$m, diameter 47 mm$\varphi$, membrane thickness 125 $\mu$m) manufactured by Merck at room temperature (25°C) under reduced pressure of -100 kPa for 1 hour, and a membrane supporting an ionic liquid was prepared in which the Membrane filter was completely wet with the ionic liquid. Here, N-methyl-2-oxopyrrodinium acetate was synthesized by the following process.

11.4 ml (200 mmol) of acetic acid was added in a flask, and was stirred under an argon gas, and the flask was immersed in an ice water bath and cooled. After the acetic acid became solid, 19.3 ml (200 mmol) of 1-methyl-2-pyrrolidinone was added to the flask. Further, the flask was removed from the ice water bath and the mixture was stirred at room temperature (25°C) to synthesize 34.8 g of N-methyl-2-oxopyrrolidinium acetate.

(Separation Performance)

For the thus prepared ionic liquid-supported membrane, the $CO_2$ permeability coefficient ($P_{CO2}$) and the separation factor $\{\alpha(CO_2/He)\}$ of $CO_2$ and He were evaluated by the following method. The evaluation was performed using a gas permeation measuring apparatus (manufactured by GL Sciences Inc.) by an equal pressure method. The mixed gas of $CO_2$ and He was allowed to flow through the supply side of the apparatus at atmospheric pressure, and Ar gas at atmospheric pressure was circulated through the permeation side. A part of the gas such as helium on the permeation side was introduced into a gas chromatograph at constant time intervals, to determine the changes in the $CO_2$ concentration and the He concentration. The permeation rate of each of $CO_2$ and He was determined from the amount of increase in each of $CO_2$ concentration and He concentration with respect to the lapse of time. The results are shown in Table 1.

The setting conditions of the gas permeation measuring apparatus, the gas chromatographic analysis conditions, and the calculation method of the gas permeability coefficient are as follows.

<Setting Conditions of Gas Permeation Measuring Apparatus>

Supplied gas amount: 200 cc/min
Supplied gas composition: $CO_2$/He (50/50) (volume ratio)
Sweep gas at permeation side: Ar
Sweep gas amount at permeation side: 10 cc/min.
Permeation area: 8.3 $cm^2$
Measuring temperature: 30°C

<Gas Chromatography Analysis Conditions>

Ar carrier gas amount: about 10 cc/min.
TCD temperature: 150°C
Oven temperature: 120°C
TCD current: 70 mA
TCD polarity: [-] LOW
TCD LOOP: 1 ml Silcosteel tube 1/16" × 1.0 × 650 mm

<Performance Calculation Method>

The gas permeation amount N was calculated from the gas concentration in the flowing gas on the permeation side determined by the gas chromatography and the permeance $Q_{CO2}$ and $Q_{He}$ was calculated based on the equations 1 and 2. Moreover, the separation factor α was calculated based on the equation 3.

Here, $N_{CO2}$ and $N_{He}$ represent the permeation amount of $CO_2$ and the permeation amount of He (unit: $cm^3$ (STP)), $P_f$ and $P_p$ represent the total pressure of the supplied gas and the total pressure of the permeated gas (unit: cmHg), A represents membrane area ($cm^2$), $X_{CO2}$ and $X_{He}$ represent the molar fraction of $CO_2$ and the molar fraction of He in the supplied gas, respectively, and $Y_{CO2}$ and $Y_{He}$ represent the molar fraction of $CO_2$ and the molar fraction of He in the permeated gas, respectively. The permeability coefficient $P_{CO2}$ (Unit: Barrer ($1 \times 10^{-10}$ $cm^3$(STP)·cm/(s·$cm^2$·cm-Hg) = 1 Barrer)) was calculated by the product of permeance $Q_{CO2}$ and $Q_{He}$ and the effective membrane thickness of the membrane.

<Effective Membrane Thickness>

The thickness of the porous membrane was measured by a dial gauge. Further, the effective membrane thickness was determined as the product of the measured membrane thickness and the pore ratio.

<$\Delta E_{HOMO-LUMO}$>

The energy gap ($\Delta E_{HOMO-LUMO}$) of the ionic liquid used in Examples 1 to 3 and Comparative Examples 1 to 3 is a value obtained by subtracting the LUMO energy level of the cation of the ionic liquid from the HOMO energy level of the anion of the ionic liquid.

The values of the HOMO energy level of the anion of the ionic liquid and the LUMO energy level of the cation of the ionic liquid were determined by a structure optimization calculation employing a Becke type 3-parameter density functional theory (B3LYP), using a quantum chemical calculation program Gaussian 09 manufactured by Gaussian. At this time, 6-31G (d) was used as the basis function, and the calculation was performed under the default conditions for the others.

[Example 2]

An ionic liquid-supported membrane was prepared in the same manner as in Example 1 except that 1-methylimidazolium acetate (No. 918 in Table 1) was used as the ionic liquid, and a separation factor of $CO_2$ and He and a permeation coefficient were calculated. Here, the 1-methylimidazolium acetate was synthesized by the following process.

11.4 ml (200 mmol) of acetic acid was added in a flask, and was stirred under an argon gas, and the flask was placed in an ice water bath and cooled. After acetic acid became solid, 15.9 ml (200 mmol) of 1-methylimidazole was added to the flask. Further, the flask was removed from the ice water bath and stirred at room temperature (25°C) to synthesize 28.43 g of 1-methylimidazolium acetate.

[Example 3]

An ionic liquid-supported membrane was prepared in the same manner as in Example 1 except that 1-ethyl-1H-imidazolium acetate (No. 130 in Table 1) (purity 97% or more) manufactured by Iolitec was used as the ionic liquid, and a separation factor of $CO_2$ and He and a permeation coefficient were calculated.

[Comparative Example 1]

An ionic liquid-supported membrane was prepared in the same manner as in Example 1, except that the ionic liquid 1-ethyl-3-methylimidazolium bis(fluorosulfonyl)imide (product name AS110), manufactured by DKS Co., Ltd., was used as the ionic liquid, and a separation factor of $CO_2$ and He and a permeation coefficient were calculated.

[Comparative Example 2]

An ionic liquid-supported membrane was prepared in the same manner as in Example 1, except that the ionic liquid (a) (1-ethyl-3-methylimidazolium acetate) described in the paper (Mitsuhiro Kanakubo, Takashi Makino, Surface Technology, vol.67, No. 2, 26-31 (2016)) was used as the ionic liquid, and a separation factor of $CO_2$ and He and a permeation coefficient were calculated.

[Comparative Example 3]

An ionic liquid-supported membrane was prepared in the same manner as in Example 1, except that 1,1,3,3-tetrametylguanidinium imidazole-1-ide No. 903 in Table 1) was used as the ionic liquid, and a separation factor of $CO_2$ and He and a permeation coefficient were calculated.

In this case, the 1,1,3,3-tetrametylguanidinium imidazole-1-ide was synthesized by the following process.

Imidazol (15 g, 220 mmol) was added little by little to a container containing 1,1,3,3-tetrametylguanidine (25.38 g, 220 mmol) with stirring at room temperature. Further, the mixture was stirred at room temperature for 2 hours to synthesize 39.4 g of 1,1,3,3-tetrametylguanidinium imidazole-1-ide.

[Table 1]

| | Ionic Liquid supported on Membrane | $\Delta E_{HOMO-LUMO}$ (a.u.) | Molecular Weight of Ionic Liquid | Whether Cation has NH Structure or Not | $P_{CO2}$ (Barrer) | $\alpha$ ($CO_2$/He) |
|---|---|---|---|---|---|---|
| Example 1 | No. 425 | 0.236 | 159.19 | Yes | 5929 | 30.7 |
| Example 2 | No. 918 | 0.207 | 142.16 | Yes | 3446 | 34.4 |
| Example 3 | No. 130 | 0.259 | 156.19 | Yes | 3571 | 29.8 |
| Comparative Example 1 | AS110 | 0.043 | 291.29 | No | 1198 | 25.7 |
| Comparative Example 2 | Ionic Liquid (a) | 0.19 | 170.2 | No | 1548 | 105.5 |
| Comparative Example 3 | No. 903 | 0.165 | 183.26 | Yes | 628 | 18.6 |

Here,

$$1 \text{ Barrer} = 1 \times 10^{-10} \text{ cm}^3(\text{STP})\cdot\text{cm}/(\text{s}\cdot\text{cm}^2\cdot\text{cmHg}).$$

The structures of the ionic liquids used in Examples 1 to 3 and Comparative Examples 1 to 3 are shown below.

[Chem. 4]

| | |
|---|---|
| No. 425 | 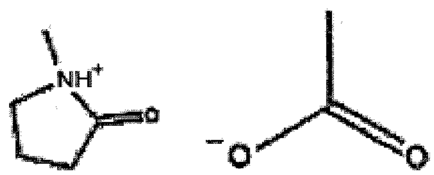 |
| No. 918 | 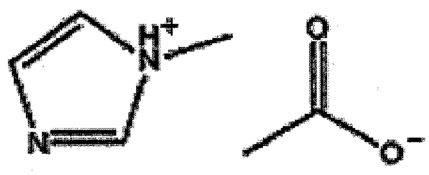 |

(continued)

| | |
|---|---|
| No. 130 | 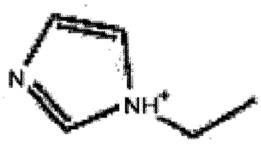 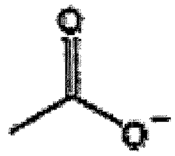 |
| AS110 | 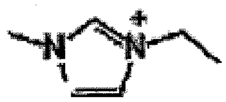 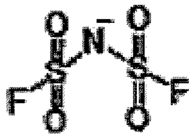 |
| Ionic Liquid(a) | 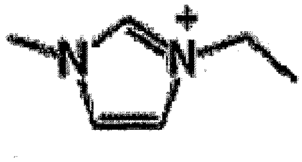 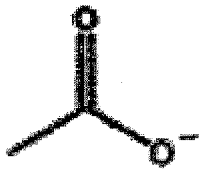 |
| No. 903 | 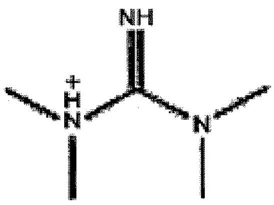 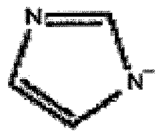 |

In Examples 1 to 3 in which the energy gap of the used ionic liquid was equal to or greater than 0.2 a.u., the $CO_2$ permeability coefficient and the separation factor of $CO_2$ and He were high, and the gas separation performance was good.

INDUSTRIAL APPLICABILITY

The present invention allows for providing an ionic liquid-containing structure which can be used as a gas separation membrane having both high selectivity and high permeability. Thus, the mixed gas can be efficiently separated.
Although the present invention has been described in detail with reference to the specific embodiment, it will be apparent to those skilled in the art that various changes and modifications can be made without departing from the spirit and scope of the present invention.
This application is based on the Japanese patent application (Japanese Patent Application No. 2019-51303) filed on March 19, 2019, and the content of which is incorporated herein as reference.

**Claims**

1. An ionic liquid-containing structure comprising an ionic liquid composed of a pair of a cation and an anion, wherein a HOMO energy level of the anion is higher than a LUMO energy level of the cation, and a difference between the HOMO energy level of the anion and the LUMO energy level of the cation is 0.2 a.u. or more.

2. The ionic liquid-containing structure according to claim 1, wherein the cation has at least one NH structure.

3. The ionic liquid-containing structure according to claim 1 or 2, wherein the ionic liquid has a molecular weight of 400 or less.

4. The ionic liquid-containing structure according to any one of claims 1 to 3, wherein the ionic liquid-containing structure

is a membrane supporting the ionic liquid, and a permeation coefficient of carbon dioxide $P_{CO2}$ is 2000 Barrer or more.

## INTERNATIONAL SEARCH REPORT

International application No.
PCT/JP2020/009267

A. CLASSIFICATION OF SUBJECT MATTER
Int.Cl. B01D69/00(2006.01)i, B01D69/02(2006.01)i
FI: B01D69/00500, B01D69/02

According to International Patent Classification (IPC) or to both national classification and IPC

B. FIELDS SEARCHED

Minimum documentation searched (classification system followed by classification symbols)
Int.Cl. B01D61/00-71/82, B01D53/14

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2007-517003 A (SHELL INT RESEARCH MIJ BV) 28.06.2007 (2007-06-28), claims, paragraphs [0045]-[0060] | 1-4 |
| X | WO 2007/101397 A1 (THE BOC GROUP, INC.) 13.09.2007 (2007-09-13), claims | 1-4 |
| X | JP 2016-523691 A (UOP LLC) 12.08.2016 (2016-08-12), claims, paragraphs [0029], [0030] | 1-4 |
| X | JP 2012-245505 A (JX NIPPON OIL AND ENERGY CORPORATION) 13.12.2012 (2012-12-13), claims, paragraphs [0014]-[0074], fig. 1-5 | 1-4 |
| A | KANAI, Kaname, Electronic structure of ionic liquids, Journal of the Vacuum Society of Japan, 2013, vol. 56, no. 2, pp. 61-66 | 1-4 |

☐ Further documents are listed in the continuation of Box C.

☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13.05.2020 | 26.05.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/009267

| | | |
|---|---|---|
| JP 2007-517003 A | 28.06.2007 | US 2005/0154247 A1<br>claims, paragraphs [0035]-[0050]<br>WO 2005/061422 A1<br>EP 1708981 A1<br>CN 1898186 A |
| WO 2007/101397 A1 | 13.09.2007 | CN 101032677 A<br>claims |
| JP 2016-523691 A | 12.08.2016 | US 2014/0318370 A1<br>claims, paragraphs [0013]-[0017]<br>WO 2014/178991 A1<br>EP 2991752 B1<br>CN 105142756 A |
| JP 2012-245505 A | 13.12.2012 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019051303 A


### Non-patent literature cited in the description


- Gas absorption characteristics of ionic liquids and application to gas separation technology. *Surface Technology,* 2016, vol. 67 (2, 90), 26-31
- Ionic liquids-Forefront and Future of Development. CMC Publishing Co., Ltd,
- **MITSUHIRO KANAKUBO ; TAKASHI MAKINO.** *Surface Technology,* 2016, vol. 67 (2), 26-31